# EUROPEAN PATENT APPLICATION

(11) **EP 3 955 225 A1**
(43) Date of publication of application: **16.02.2022**
(21) Application number: 21189896.0
(22) Date of filing: 05.08.2021
(51) Int. Cl.: G08B 13/196, G08B 1/08

(54) **DEVICE, SYSTEM, METHOD AND PROGRAM FOR IDENTIFICATION OF IMAGE DATA CAPTURED AT A REFERENCE TIMING**

(30) Priority: 13.08.2020 JP 2020136810
(71) Applicant: YOKOGAWA ELECTRIC CORPORATION, Musashino-shi Tokyo 180-8750 (JP)
(72) Inventor: KOJIMA, Osamu, Musashino-shi, Tokyo, 180-8750 (JP); WADA, Atsushi, Musashino-shi, Tokyo, 180-8750 (JP)
(74) Representative: Winter, Brandl - Partnerschaft mbB

(57) **Abstract**

[Solving means] Provided is a device including an emission unit configured to generate a timing signal indicating reference timing in an image capturing environment by a monitoring camera that is standalone, an acquisition unit configured to acquire video image data captured by the monitoring camera, and an identification unit configured to identify image data captured at the reference timing in the video image data based on the timing signal included in the video image data. [Selected drawing] Fig. 1

## Description

### BACKGROUND

### 1. TECHNICAL FIELD

The present invention relates to a device, a system, a method, and a program.

### 2. RELATED ART

Up to now, various types of security systems using a monitoring camera have been proposed (for example, see Patent document 1).
Patent document 1: Japanese Patent Application Publication No. 2015-162232

### GENERAL DISCLOSURE

According to a first aspect of the present invention, there is provided a device. The device may include an emission unit configured to generate a timing signal indicating reference timing in an image capturing environment by a monitoring camera that is standalone. The device may include an acquisition unit configured to acquire video image data captured by the monitoring camera. The device may include an identification unit configured to identify image data captured at the reference timing in the video image data based on the timing signal included in the video image data.

The device may include a detection unit configured to detect an abnormality of a region of interest. The emission unit may generate the timing signal in response to detection of the abnormality by the detection unit.

The emission unit may generate the timing signal each time a current time instant reaches a reference time instant.

The identification unit may include an addition unit configured to add a tag indicating the image data identified to the video image data.

The device may include a transmission unit configured to transmit the video image data to a file server accessible from other equipment.

The emission unit may generate a sound signal.

The emission unit may generate an optical signal.

The emission unit may generate the optical signal in at least a part of a field of view of the monitoring camera.

The monitoring camera may swing or rotate at a reference speed. The emission unit may generate the optical signal at timing at which the optical signal is contained in the field of view of the monitoring camera.

According to a second aspect of the present invention, there is provided a system. The system may include a standalone monitoring camera. The system may include the device according to the first aspect.

According to a third aspect of the present invention, there is provided a method. The method may include generating a timing signal indicating reference timing in an image capturing environment by a monitoring camera that is standalone. The method may include acquiring video image data captured by the monitoring camera. The method may include identifying image data captured at the reference timing in the video image data based on the timing signal included in the video image data.

According to a fourth aspect of the present invention, there is provided a program. The program may cause a computer to function as an emission unit configured to generate a timing signal indicating reference timing in an image capturing environment by a monitoring camera that is standalone. The program may cause the computer to function as an acquisition unit configured to acquire video image data captured by the monitoring camera. The program may cause the computer to function as an identification unit configured to identify image data captured at the reference timing in the video image data based on the timing signal included in the video image data.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a security system 1 according to an embodiment.
Fig. 2 illustrates an operation of a device 4.
Fig. 3 illustrates an example of a computer 2200 in which an entirety or a part of a plurality of aspects of the present invention may be embodied.

### DESCRIPTION OF EXEMPLARY EMBODIMENTS

Hereinafter, the present invention will be described by way of embodiments of the invention, but the following embodiments are not intended to limit the invention according to the claims. In addition, not all combinations of features described in the embodiments necessarily have to be essential to solving means of the invention.

### [1. Security system 1]

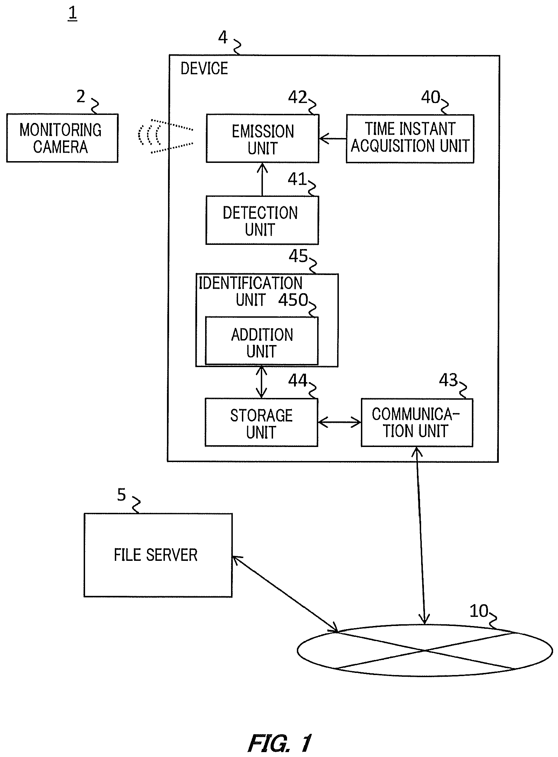

Fig. 1 illustrates a security system 1 according to the present embodiment.

The security system 1 is one example of a system, and includes a monitoring camera 2, a device 4, and a file server 5.

The device 4 and the file server 5 among the respective configurations of the security system 1 herein may be mutually connected via a communication network 10. The communication network 10 may be configured by including various types of networks such as the Internet, a wide area network (WAN), and a local area network or a combination thereof. The communication network 10 may include a connection point by way of at least one of wired and wireless means. The communication network 10 may be realized by a dedicated circuit separated from a public line such as the Internet.

### [1. 1 Monitoring camera 2]

The monitoring camera 2 is disposed in a standalone state, and can operate without communicating with the device 4 and the file server 5 in the security system 1.

The monitoring camera 2 may regularly perform image capturing to generate video image data. As one example, the monitoring camera 2 may perform the image capturing at 30f/s. The monitoring camera 2 may be a visible light camera, or an infrared or ultraviolet (as one example, X ray) camera. The monitoring camera 2 may store the captured video image data in an internal storage area (not illustrated).

The video image data stored in the monitoring camera 2 may be read out by a reading device (not illustrated) from a storage media (as one example, an SD card) removed from the monitoring camera 2, or may be read out by equipment (not illustrated) externally connected to the monitoring camera 2. The read video image data may be uploaded to the file server 5 or the like.

The monitoring camera 2 may be arranged in a facility of a security target. As one example according to the present embodiment, a camera body of the monitoring camera 2 may be secured, and a field of view of the monitoring camera 2 may be fixed. The facility may be a plant, or may be a school, a house, a station, a museum, a hospital, a shop (as one example, a restaurant), or the like. Examples of the plant include not only an industrial plant such as a chemical or bio plant but also a plant that manages and controls a well source such as a gas field or an oil field and its surrounding area, a plant that manages and controls power generation such as hydroelectric, thermal, or nuclear power generation, a plant that manages and controls environmental power generation such as solar or wind power generation, a plant that manages and controls water and sewerage or a dam, and the like. A doorway of the facility may be a doorway disposed at a boundary between an inside and an outside of the facility, or may be a doorway disposed at a boundary between one region and another region in the facility.

### [1. 2 Device 4]

The device 4 is configured to assist the guard duty of the facility in cooperation with the monitoring camera 2. The device 4 includes a time instant acquisition unit 40, a detection unit 41, an emission unit 42, a communication unit 43, a storage unit 44, and an identification unit 45. Note that among these configurations, at least the emission unit 42, the detection unit 41, and the time instant acquisition unit 40 may be arranged in the vicinity of the monitoring camera 2. The communication unit 43, the storage unit 44, and the identification unit 45 may be integrally disposed with the emission unit 42, the detection unit 41, and the time instant acquisition unit 40, or may be disposed separately.

### [1. 2-1 Time instant acquisition unit 40]

The time instant acquisition unit 40 is configured to acquire a current time instant. The time instant acquisition unit 40 may be a radio wave clock, and may acquire the current time instant by receiving standard frequency wave from a transmitter station that is not illustrated in the drawing. In addition, the time instant acquisition unit 40 may be a GPS reception device, and may acquire the current time instant from time instant information included in radio wave from a GPS satellite that is not illustrated in the drawing. The time instant acquisition unit 40 may supply the current time instant to the emission unit 42.

### [1. 2-1. Detection unit 41]

The detection unit 41 is configured to detect an abnormality of a region of interest. The detection unit 41 may supply a detection signal indicating that the abnormality is detected to the emission unit 42.

The region of interest herein may include the monitoring camera 2, and may include the field of view of the monitoring camera 2. As one example, the region of interest may be an entire facility where the monitoring camera 2 is disposed, or may be a space where the monitoring camera 2 is disposed inside the facility.

For example, the detection unit 41 may be any of an intrusion detection sensor configured to detect an intrusion into the region of interest, a human detection sensor configured to detect a human body in the region of interest, an opening or closing sensor configured to detect opening or closing of a door or a window in the region of interest, and a fire sensor configured to detect generation of heat or smoke in the region of interest. The sensor may be an ultrasonic sensor, a microwave sensor, an infrared sensor, a wire sensor, a trap sensor, an electric field type sensor, a magnet sensor, a temperature sensor, or the like.

### [1. 2-1. Emission unit 42]

The emission unit 42 is configured to generate a timing signal indicating reference timing in an image capturing environment by the monitoring camera 2. The emission unit 42 may be arranged in the field of view of the monitoring camera 2, or may be arranged out of the field of view.

The emission unit 42 may generate a sound signal as the timing signal. In this case, the monitoring camera 2 may capture video image data including a sound, and a sound signal may have a sound volume (also referred to as a sound pressure), a frequency, a tone, a duration time, the number of times of repetitions, or the like which can be detected in the video image data captured by the monitoring camera 2.

Instead of, or in addition to, this configuration, the emission unit 42 may generate an optical signal as the timing signal. The emission unit 42 may generate an optical signal in at least a part of the field of view of the monitoring camera 2. When the emission unit 42 is arranged out of the field of view of the monitoring camera 2, the emission unit 42 may perform direct or indirect illumination in the field of view of the monitoring camera 2. The optical signal may have a brightness (as one example, a light intensity, a brilliance, a luminance, or the like), a frequency, a duration time, the number of times of repetitions, or the like, which can be detected in the video image data captured by the monitoring camera 2.

The emission unit 42 may generate timing signal each time the current time instant reaches a reference time instant. For example, each time the current time instant supplied from the time instant acquisition unit 40 reaches the reference time instant, the emission unit 42 may generate the timing signal. For example, the reference time instant may be on the hour every hour (as one example, 12:00, 13:00, ···), the half hour every hour (as one example, 12:30, 13:30, ···), or the like.

Instead of, or in addition to, this configuration, the emission unit 42 may generate the timing signal in response to detection of the abnormality by the detection unit 41. The emission unit 42 may generate the timing signal according to reception of the detection signal from the detection unit 41.

The emission unit 42 may set the timing signal generated according to the timing at which the current time instant reaches the reference time instant and the timing signal generated in response to the detection of the abnormality as the same signal or different signals.

### [1. 2-1. Communication unit 43]

The communication unit 43 is one example of an acquisition unit, and is configured to acquire the video image data captured by the monitoring camera 2. The communication unit 43 may acquire the video image data read from the monitoring camera 2 and uploaded to the file server 5 or the like, via the communication network 10. The communication unit 43 may supply the acquired video image data to the storage unit 44.

The communication unit 43 may be one example of a transmission unit, and may transmit the video image data to the file server 5. The video image data transmitted to the file server 5 may be added with a tag by an addition unit 450 which will be described below. The communication unit 43 may transmit the video image data in the storage unit 44.

### [1. 2-1. Storage unit 44]

The storage unit 44 stores the video image data acquired by the communication unit 43.

### [1. 2-1. Identification unit 45]

The identification unit 45 is configured to identify image data (also referred to as a reference frame) captured at the reference timing based on the timing signal included in the video image data, in this video image data.

The identification unit 45 may read out the video image data from the storage unit 44 and detect the timing signal included in the video image data to identify the image data corresponding to the generation timing as the reference frame. The identification unit 45 may further identify a position of the reference frame in the video image data (as one example, a frame number of the reference frame, or the number of seconds it takes to perform reproduction from a beginning of the video image data up to the reference frame).

The identification unit 45 may include the addition unit 450 configured to add a tag indicating the identified reference frame to the video image data. The tag may indicate a position of the reference frame in the video image data. The addition unit 450 may add the tag to the video image data to update the video image data in the storage unit 44.

### [1. 3. File server 5]

The file server 5 is accessible from other equipment different from the device 4 (as one example, a security company which has installed the monitoring camera 2), and shares a file to be stored with the other equipment. The file server 5 may be accessible from a plurality of pieces of equipment at the same time. The file server 5 may store the video image data read out and uploaded from the monitoring camera 2. In addition, the file server 5 may store the video image data transmitted from the communication unit 43 of the device 4.

### [1. 4. Effects attained from the device 4]

In accordance with the device 4 in the security system 1 described above, the timing signal indicating the reference timing in the image capturing environment by the standalone monitoring camera 2 is emitted, and the image data (also referred to as the reference frame) captured at the reference timing is identified in the video image data based on the timing signal included in the video image data. Therefore, without performing clock synchronization or communication with the standalone monitoring camera 2 during the image capturing, it is possible to easily extract the image data captured at desired timing from the already captured video image data.

In addition, since the timing signal is emitted in response to the detection of the abnormality of the region of interest, it is possible to easily extract the image data captured at the generation timing of the abnormality from the video image data.

In addition, since the timing signal is emitted each time the current time instant reaches the reference time instant, it is possible to easily extract the image data captured at a desired time instant or in a desired time slot from the video image data.

In addition, since the tag indicating the identified image data is added to the video image data, it is possible to easily extract the image data captured at the desired timing by referring to the tag of the video image data.

In addition, since the video image data to which the tag indicating the identified image data is added is transmitted to the file server 5, while concentration of accesses to the video image data is avoided, it is possible to easily cause the other equipment to extract the image data captured at the desired timing.

### [2. Operation of the device 4]

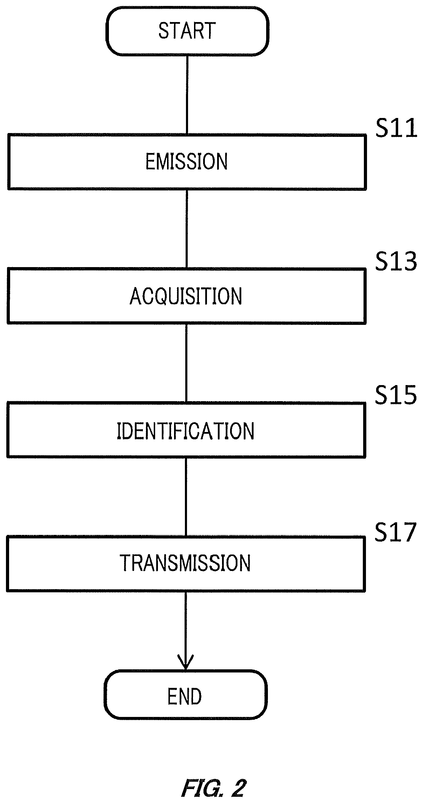

Fig. 2 illustrates an operation of the device 4. The device 4 is configured to assist the guard duty of the facility by performing processing in steps S11 to S17.

In step S11, the emission unit 42 generates the timing signal in the image capturing environment by the monitoring camera 2. The emission unit 42 may generate the timing signal each time the current time instant reaches the reference time instant, or may generate the timing signal in response to the detection of the abnormality by the detection unit 41. Thus, the video image data including the timing signal is captured.

In step S13, the communication unit 43 acquires the captured video image data. The communication unit 43 may acquire, via the communication network 10, the video image data read out from the monitoring camera 2.

In step S15, the identification unit 45 identifies the reference frame captured at the reference timing in the video image data based on the timing signal included in the video image data. In addition, the addition unit 450 may add the tag indicating the identified reference frame to the video image data.

In step S17, the communication unit 43 transmits the video image data to the file server 5. The communication unit 43 may transmit the video image data to which the tag is added by the addition unit 450.

### [3. Modified example]

Note that according to the embodiment mentioned above, it has been described that the camera body of the monitoring camera 2 is secured, but the camera body may swing or rotate at a reference speed.
As one example, the camera body of the monitoring camera 2 can perform a panning movement or a tilting movement at the reference speed. The reference speed may be any speed. When the monitoring camera 2 swings or rotates, the emission unit 42 of the device 4 may generate an optical signal at timing at which the optical signal is contained in the field of view of the monitoring camera 2. For example, when the current time instant reaches the reference time instant, the emission unit 42 may generate the optical signal at timing at which the optical signal is contained in the field of view of the monitoring camera 2, or when an abnormality is detect by the detection unit 41, the emission unit 42 may generate the optical signal at timing at which the optical signal is contained in the field of view of the monitoring camera 2.

It has been described that the security system 1 includes the monitoring camera 2, but the security system 1 may include a plurality of monitoring cameras 2. In this case, the plurality of monitoring cameras 2 may be arranged in the same facility. In addition, the emission unit 42 of the device 4 may generate the timing signal at the same time in respective image capturing environments of the plurality of monitoring cameras 2. The communication unit 43 of the device 4 may acquire the video image data captured by each of the monitoring cameras 2, and the identification unit 45 may identify the reference frame captured at the reference timing in each of the video image data.

In addition, it has been described that the device 4 includes the time instant acquisition unit 40 and the detection unit 41, but a configuration may be adopted where the device 4 does not include any of these.
When the device 4 does not include the time instant acquisition unit 40, the emission unit 42 may generate the timing signal each time the internally clocked current time instant reaches the reference time instant, or may generate the timing signal in response to the detection of the abnormality by the detection unit 41. When the device 4 does not include the detection unit 41, the emission unit 42 may generate the timing signal each time the current time instant reaches the reference time instant.

In addition, it has been described that the communication unit 43 acquires the video image data via the communication network 10, but when the communication unit 43 is externally connected to the monitoring camera 2, the communication unit 43 may read out the video image data from the monitoring camera 2, or may may read out the video image data from a storage media (as one example, an SD card) removed from the monitoring camera 2.

In addition, it has been described that the communication unit 43 transmits the video image data which is captured by the monitoring camera 2 and to which the tag is added by the addition unit 450 to the file server 5, but the communication unit 43 may transmit partial video image data extracted based on the reference frame to the file server 5. For example, the identification unit 45 may extract a part of the video image data including the reference frame from the entire video image data captured by the monitoring camera 2. As one example, the identification unit 45 may extract the video image data of a reference time width (as one example, 5 minutes) including the reference frame identified by the timing signal emitted in response to the detection of the abnormality. The communication unit 43 may transmit each of the video image data extracted by the identification unit 45 to the file server 5.

In addition, it has been described that the communication unit 43 transmits the video image data to the file server 5, but a configuration may be adopted where the communication unit 43 does not transmit the video image data to the file server 5. In this case, the image data captured by the monitoring camera 2 and stored in the storage unit 44 is accessible from external equipment. In addition, a configuration may be adopted where the security system 1 does not include the file server 5.

In addition, various embodiments of the present invention may be described with reference to flowcharts and block diagrams whose blocks may represent (1) steps of processes in which operations are performed or (2) sections of devices responsible for performing operations. Certain steps and sections may be implemented by a dedicated circuit, programmable circuitry supplied with computer-readable instructions stored on computer-readable media, and/or processors supplied with computer-readable instructions stored on computer-readable media. A dedicated circuit may include digital and/or analog hardware circuits and may include integrated circuits (IC) and/or discrete circuits. Programmable circuitry may include reconfigurable hardware circuits including logical AND, OR, XOR, NAND, NOR, and other logical operations, flip-flops, registers, memory elements, etc., such as field-programmable gate arrays (FPGA), programmable logic arrays (PLA), etc.

Computer-readable media may include any tangible device that can store instructions for execution by a suitable device, such that the computer-readable medium having instructions stored therein comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer-readable instructions may be provided to a processor of a general purpose computer, special purpose computer, or other programmable data processing device, or to programmable circuitry, locally or via a local area network (LAN), wide area network (WAN) such as the Internet, etc., to execute the computer-readable instructions to create means for performing operations specified in the flowcharts or block diagrams. Examples of processors include computer processors, processing units, microprocessors, digital signal processors, controllers, microcontrollers, etc.

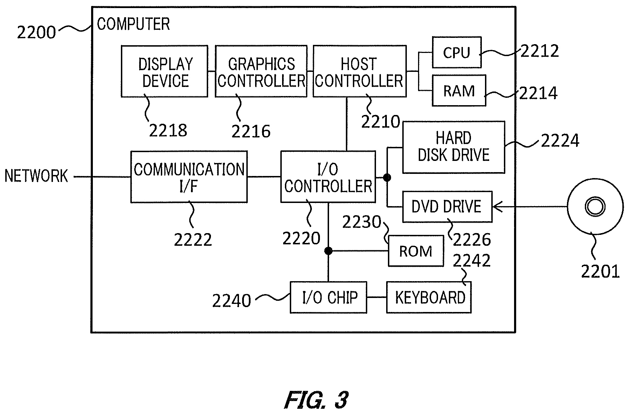

Fig. 3 illustrates an example of a computer 2200 through which a plurality of aspects of the present invention may be entirely or partially embodied. A program that is installed in the computer 2200 can cause the computer 2200 to function as or perform operations associated with apparatuses of the embodiments of the present invention or one or more sections thereof, or perform the operations or the one or more sections, and/or cause the computer 2200 to perform processes of the embodiments of the present invention or steps of the processes. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer-readable media such as the DVD-ROM 2201 or the IC card. The program is read from the computer-readable media, installed into the hard disk drive 2224, RAM 2214, or ROM 2230, which are also examples of computer-readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer-readable media on the computer 2200 or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

- 1: security system
- 2: monitoring camera
- 4: device
- 5: file server
- 10: communication network
- 40: time instant acquisition unit
- 41: detection unit
- 42: emission unit
- 43: communication unit
- 44: storage unit
- 45: identification unit
- 450: addition unit
- 2200: computer
- 2201: DVD-ROM
- 2210: host controller
- 2212: CPU
- 2214: RAM
- 2216: graphics controller
- 2218: display device
- 2220: input/output controller
- 2222: communication interface
- 2224: hard disk drive
- 2226: DVD-ROM drive
- 2230: ROM
- 2240: input/output chip
- 2242: keyboard

## Claims

1. A device comprising:
an emission unit configured to generate a timing signal indicating reference timing in an image capturing environment by a monitoring camera that is standalone;
an acquisition unit configured to acquire video image data captured by the monitoring camera; and
an identification unit configured to identify image data captured at the reference timing in the video image data based on the timing signal included in the video image data.

2. The device according to claim 1, comprising a detection unit configured to detect an abnormality of a region of interest, wherein
the emission unit is configured to generate the timing signal in response to detection of the abnormality by the detection unit.

3. The device according to claim 1 or 2, wherein the emission unit is configured to generate the timing signal each time a current time instant reaches a reference time instant.

4. The device according to any one of claims 1 to 3, wherein the identification unit includes an addition unit configured to add a tag indicating the image data identified to the video image data.

5. The device according to claim 4, comprising a transmission unit configured to transmit the video image data to a file server accessible from other equipment.

6. The device according to any one of claims 1 to 5, wherein the emission unit is configured to generate a sound signal.

7. The device according to any one of claims 1 to 6, wherein the emission unit is configured to generate an optical signal.

8. The device according to claim 7, wherein the emission unit is configured to generate the optical signal in at least a part of a field of view of the monitoring camera.

9. The device according to claim 8, wherein:
the monitoring camera is configured to swing or rotate at a reference speed; and
the emission unit is configured to generate the optical signal at timing at which the optical signal is contained in the field of view of the monitoring camera.

10. A system comprising:
a standalone monitoring camera; and
the device according to any one of claims 1 to 9.

11. A method comprising:
generating a timing signal indicating reference timing in an image capturing environment by a monitoring camera that is standalone;
acquiring video image data captured by the monitoring camera; and
identifying image data captured at the reference timing in the video image data based on the timing signal included in the video image data.

12. A program that causes a computer to function as:
an emission unit configured to generate a timing signal indicating reference timing in an image capturing environment by a monitoring camera that is standalone;
an acquisition unit configured to acquire video image data captured by the monitoring camera; and
an identification unit configured to identify image data captured at the reference timing in the video image data based on the timing signal included in the video image data.
